# EUROPÄISCHE PATENTSCHRIFT

(11) **EP 1 163 612 B1**
(45) Veröffentlichungstag und Bekanntmachung des Hinweises auf die Patenterteilung: **11.12.2002**
(21) Anmeldenummer: 00926682.6
(22) Anmeldetag: 16.03.2000
(51) Int. Cl.: G06F 17/30

(54) **STRUKTURIERUNGSPROGRAMM FÜR EINE DATENVERARBEITUNGSANLAGE UNTER BERÜCKSICHTIGUNG GEOGRAPHISCHER INDIZIERUNG**
STRUCTURING PROGRAM FOR A DATA PROCESSING SYSTEM THAT TAKES GEOGRAPHICAL INDEXING INTO ACCOUNT
PROGRAMME DE STRUCTURATION POUR UN SYSTEME DE TRAITEMENT DE DONNEES PRENANT EN COMPTE UN INDEXAGE GEOGRAPHIQUE

(43) Veröffentlichungstag der Anmeldung: 19.12.2001
(73) Patentinhaber: Hermann, Michael, 88400 Biberach (DE)
(72) Erfinder: Hermann, Michael, 88400 Biberach (DE)
(74) Vertreter: Kiessling, Christian
(86) Internationale Anmeldenummer: DE0000809
(87) Internationale Veröffentlichungsnummer: WO01069434

(56) Entgegenhaltungen:
- EP-A- 0 908 835
- DE-A- 4 435 903
- US-A- 5 893 093
- SMITH T R: "A DIGITAL LIBRARY FOR GEOGRAPHICALLY REFERENCED MATERIALS" COMPUTER,US,IEEE COMPUTER SOCIETY, LONG BEACH., CA, US, Bd. 29, Nr. 5, 1. Mai 1996 (1996-05-01), Seiten 54-60, XP000591713 ISSN: 0018-9162
- "GEOGRAPHIC DATA COLLECTION FOR GEOGRAPHIC INFORMATION SYSTEM" IBM TECHNICAL DISCLOSURE BULLETIN,US,IBM CORP. NEW YORK, Bd. 37, Nr. 4B, 1. April 1994 (1994-04-01), Seite 505 XP000451328 ISSN: 0018-8689

## Beschreibung

Die Erfindung betrifft eine Datenverarbeitungsanlage mit einer Prozessoreinheit und mindestens einer Speichereinheit, einer Eingabeeinheit zum Eingeben von Daten und einer Ausgabeeinheit zum Ausgeben von Daten, wobei die Datenverarbeitungsanlage über eine bidirektionale Schnittstelle interaktiv mit dem weltweiten Internet vernetzbar ist.

Datenverarbeitungsanlagen der eingangs genannten Art weisen den Nachteil auf, dass bei einem Suchvorgang für spezifische Inhalte oder Adressen ein örtlicher Bezug entsprechender Informationsanbieter zu einer bestimmten geographischen Region keine Berücksichtigung findet, so dass es einem Benutzer, der sich bei Suche nach Informationsanbietern auf ein vorherbestimmtes geographisches Gebiet beschränken will, eine Zuordnung der bei einem bestimmten Suchbegriff gefundenen Informationsanbieter zu unterschiedlichen geographischen Regionen selbst vornehmen muss, wobei dieser Vorgang langwierig und mühsam ist.

Aus der DE 44 35 903 A1 ist ein Verfahren zum gebietsorientierten Zugriff auf eine Datenbank bekannt, auf die mittels einer Gemeindekennziffer zugegriffen werden kann, wobei durch Bereitstellen von Dateien, in denen zum einen zu jeder mit einer Gemeindekennziffer gekennzeichneten Gemeinde Daten gespeichert sind und in denen zum anderen zu jedem geografischen Namen Koordinaten gespeichert sind in Verbindung mit einer aus diesen Dateien gebildeten weiteren Datei, in der zu jeder Gemeindekennziffer mindestens die geografischen Daten gespeichert sind erreicht wird, dass unter Verwendung von auf dem Markt befindlichen Datenbanken die Daten eines bestimmten Gebietes ermittelbar sind, das zu einer bestimmten Gemeinde oder zu einem durch eine vorgegebene Postleitzahl definierten Bereich steht. Beliebig vorgebbare oder variable spezifische Informationen aus den Regionen können dabei jedoch nicht gefunden werden.

Aufgabe der Erfindung ist es deshalb, ein Strukturierungsprogramm für eine Datenverarbeitungsanlage zu schaffen, mit dem eine automatische Zuordnung von Informationsanbietern zu vorherbestimmten geographischen Regionen ermöglicht ist, wobei auch spezifische Informationen aus den Regionen berücksichtigt werden können.

Für eine Datenverarbeitungsanlage der eingangs genannten Art wird diese Aufgabe dadurch gelöst, dass in der Speichereinheit ein Programm mit folgenden Schritten gespeichert ist:
- Zuordnen vorgegebener Daten eines eine Mehrzahl von Daten enthaltenden Datenpools zu übergeordneten Speicheradressen;
- Auswählen vorgegebener Daten des Datenpools nach Maßgabe eines Eingabecodes, der entsprechend der übergeordneten Speicheradressen geordnet ist, wobei den übergeordneten Speicheradressen geographische Regionen zugeordnet sind und den übergeordneten Speicheradressen zusätzlich spezifische Inhalte zugeordnet sind, und den geographischen Regionen Landkreise zugeordnet sind, die gemäß ihrem Kfz-Kürzel eingegeben sind.

Bevorzugte Ausführungsformen der Erfindung sind Gegenstand der Unteransprüche.

Bei der erfindungsgemäßen Datenverarbeitungsanlage wird durch die Merkmalskombination, dass in der Speichereinheit ein Programm mit folgenden Schritten gespeichert ist:
- Zuordnen vorgegebener Daten eines eine Mehrzahl von Daten enthaltenden Datenpools zu übergeordneten Speicheradressen;
- Auswählen vorgegebener Daten des Datenpools nach Maßgabe eines Eingabecodes, der entsprechend der übergeordneten Speicheradressen geordnet ist, wobei den übergeordneten Speicheradressen geographische Regionen zugeordnet sind und den übergeordneten Speicheradressen zusätzlich spezifische Inhalte zugeordnet sind, und den geographischen Regionen Landkreise zugeordnet sind, die gemäß ihrem Kfz-Kürzel eingegeben sind,
erreicht, dass über den Eingabecode beliebige der übergeordneten Speicheradressen auswählbar sind und somit gezielte Teilmengen der in den übergeordneten Speicheradressen enthaltenen spezifischen Inhalte und Informationen abrufbar sind, wodurch eine Teilmengenzuordnung nach geographischen Regionen über ein Kfz-Kürzel ermöglicht ist.

Gemäß einer bevorzugten Ausführungsform der erfindungsgemäßen Datenverarbeitungsanlage ist vorgesehen, dass die spezifischen Inhalte Handels-Informationen, Event-Informationen und Service-Informationen, wie etwa Verkehrs-Informationen, Finanz-Informationen und Reise-Informationen betreffen.

Die unterschiedlichen übergeordneten Speicheradressen sind bei der erfindungsgemäßen Datenverarbeitungsanlage vorzugsweise durch Links miteinander verbunden. Des weiteren sind die unterschiedlichen übergeordneten Speicheradressen bei der erfindungsgemäßen Datenverarbeitungsanlage vorzugsweise durch Hyperlinks im Internet platziert. Dadurch wird ein Anwender in die Lage versetzt, über die erfindungsgemäße Datenverarbeitungsanlage einen themenbezogenen Zugriff zum weltweiten Internet zu erlagen.

Die Eingabeeinheit zum Eingeben von Daten ist bei der erfindungsgemäßen Datenverarbeitungsanlage vorzugsweise als Tastatureinrichtung ausgeführt. Dadurch ist eine einfache Eingabe und Zuordnung von Daten von Hand von einem Benutzer der erfindungsgemäßen Datenverarbeitungsanlage ermöglicht. Die Ausgabeeinheit zum Ausgeben von Daten ist dabei vorzugsweise als Monitoreinrichtung ausgeführt.

Die Zuordnung vorgegebener Daten eines eine Mehrzahl von Daten enthaltenden Datenpools zu übergeordneten Speicheradressen erfolgt bei der erfindungsgemäßen Datenverarbeitungsanlage vorzugsweise über die Tastatureinrichtung. Diese Zuordnung kann dabei einerseits von dem Benutzer der erfindungsgemäßen Datenverarbeitungsanlage durchgeführt werden, und sie kann alternativ auch von einem Benutzer einer Datenverarbeitungsanlage erfolgen, die über das Internet mit der erfindungsgemäßen Datenverarbeitungsanlage verbunden ist.

Die erfindungsgemäße Datenverarbeitungsanlage wird im folgenden anhand einer bevorzugten Ausführungsform erläutert, die in der Figur der Zeichnung dargestellt ist. Darin zeigt:

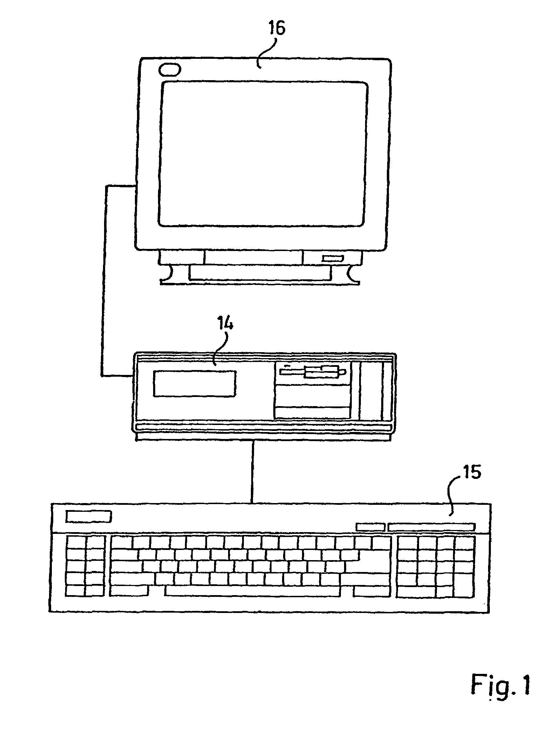

- Fig.1: eine schematische Darstellung einer bevorzugten Ausführungsform der erfindungsgemäßen Datenverarbeitungsanlage.

Bei der in Figur 1 dargestellten Datenverarbeitungsanlage 14,15,16 mit einer nicht dargestellten internen Prozessoreinheit in einem Gehäuse 14 und einer nicht dargestellten internen Speichereinheit, einer Eingabeeinheit 15 zum Eingeben von Daten und eine Ausgabeeinheit 16 zum Ausgeben von Daten, wird ein Strukturierungsprogramm, mit dem eine automatische Zuordnung von Informationsanbietern zu vorherbestimmten geographischen Regionen ermöglicht ist, dadurch geschaffen, dass in der Speichereinheit ein Programm mit folgenden Schritten gespeichert ist: Zuordnen vorgegebener Daten eines eine Mehrzahl von Daten enthaltenden Datenpools zu übergeordneten Speicheradressen; Auswählen vorgegebener Daten des Datenpools nach Maßgabe eines Eingabecodes, der entsprechend der übergeordneten Speicheradressen geordnet ist. Die Datenverarbeitungsanlage 14,15,16 ist über eine nicht dargestellte bidirektionale Schnittstelle interaktiv mit dem weltweiten Internet vernetzbar.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Datenverarbeitungsanlage mit einer Prozessoreinheit und mindestens einer Speichereinheit, einer Eingabeeinheit zum Eingeben von Daten und eine Ausgabeeinheit zum Ausgeben von Daten, wobei die Datenverarbeitungsanlage über eine bidirektionale Schnittstelle interaktiv mit dem weltweiten Internet vernetzbar ist, **dadurch gekennzeichnet, dass** in. der Speichereinheit ein Programm mit folgenden Schritten gespeichert ist:
- Zuordnen vorgegebener Daten eines eine Mehrzahl von Daten enthaltenden Datenpools zu übergeordneten Speicheradressen;
- Auswählen vorgegebener Daten des Datenpools nach Maßgabe eines Eingabecodes, der entsprechend der übergeordneten Speicheradressen geordnet ist, wobei den übergeordneten Speicheradressen geographische Regionen zugeordnet sind und den übergeordneten Speicheradressen zusätzlich spezifische Inhalte zugeordnet sind, und den geographischen Regionen Landkreise zugeordnet sind, die gemäß ihrem Kfz-Kürzel eingegeben sind.

2. Vorrichtung nach Anspruch 3, **dadurch gekennzeichnet, dass** die spezifischen Inhalte Handelsinformation enthalten.

3. Vorrichtung nach Anspruch 2, **dadurch gekennzeichnet, dass** die spezifischen Inhalte Event-Informationen enthalten.

4. Vorrichtung nach einem der Ansprüche 2 oder 3, **dadurch gekennzeichnet, dass** die spezifischen Inhalte Service-Informationen enthalten.

5. Vorrichtung nach einem der Ansprüche 2 bis 4, **dadurch gekennzeichnet, dass** die spezifischen Inhalte Verkehrs-Informationen enthalten.

6. Vorrichtung nach einem der Ansprüche 2 bis 5, **dadurch gekennzeichnet, dass** die spezifischen Inhalte Firmen-Informationen enthalten.

7. Vorrichtung nach einem der Ansprüche 2 bis 6, **dadurch gekennzeichnet, dass** die spezifischen Inhalte Reise-Informationen enthalten.

8. Vorrichtung nach einem der vorhergehenden Ansprüche, **dadurch gekennzeichnet, dass** die unterschiedlichen übergeordneten Speicheradressen durch Links miteinander verbunden sind.

9. Vorrichtung nach Anspruch 8, **dadurch gekennzeichnet, dass** die unterschiedlichen übergeordneten Speicheradressen durch Hyperlinks im Internet platziert sind.

10. Vorrichtung nach einem der vorhergehenden Ansprüche, **dadurch gekennzeichnet, dass** die Eingabeeinheit zum Eingeben von Daten als Tastatureinrichtung ausgeführt ist.

11. Vorrichtung nach einem der vorhergehenden Ansprüche, **dadurch gekennzeichnet, dass** die Ausgabeeinheit zum Ausgeben von Daten als Monitoreinrichtung ausgeführt ist.

12. Vorrichtung nach einem der vorhergehenden Ansprüche, **dadurch gekennzeichnet, dass** die Zuordnung vorgegebener Daten eines eine Mehrzahl von Daten enthaltenden Datenpools zu übergeordneten Speicheradressen über eine Tastatureinrichtung von Hand erfolgt.

13. Vorrichtung nach Anspruch 12, **dadurch gekennzeichnet, dass** die Zuordnung von dem Benutzer der erfindungsgemäßen Datenverarbeitungsanlage durchgeführt wird.

14. Vorrichtung nach Anspruch 12, **dadurch gekennzeichnet, dass** die Zuordnung von einem Benutzer einer Datenverarbeitungsanlage erfolgt, die über das Internet mit der erfindungsgemäßen Datenverarbeitungsanlage verbunden ist.

## Claims

1. A data processing system having a processing unit and at least a storing unit, an input unit for inputting data and an output unit for outputting data, wherein the data processing system is interactively connectable to the world wide internet, **characterized in that** in the storing unit these is stored a program carrying out the following steps:
- allocating predetermined data contained in a pool having a plurality of data to hierarchically upper storing addresses;
- electing predetermined data contained in the pool according to an input code classified in accordance with the hierarchically upper storing addresses, wherein geographical regions are allocated to the hierarchically upper storing addresses and additionally specific contents are allocated to the hierarchically upper storing addresses, and that counties are allocated to the geographical regions, said counties being input according to their auto plate's district abbreviation.

2. System according to claim 1, **characterized in that** the specific contents contain commerce related information.

3. System according to claim 1, **characterized in that** the specific contents contain event related information.

4. System according to claim 1, **characterized in that** the specific contents contain service related information.

5. System according to claim 1, **characterized in that** the specific contents contain traffic related information.

6. System according to claim 1, **characterized in that** the specific contents contain company related information.

7. System according to claim 1, **characterized in that** the specific contents contain travel related information.

8. System according to any of the previous claims, **characterized in that** the divers hierarchically upper storing addresses are interconnected by links.

9. System according to claim 8, **characterized in that** the divers hierarchically upper storing addresses are placed in the internet by hyperlinks.

10. System according to any of the previous claims, **characterized in that** the input unit for inputting data contains a keyboard means.

11. System according to any of the previous claims, **characterized in that** the output unit for outputting data contains a monitor means.

12. System according to any of the previous claims, **characterized in that** allocating predetermined data contained in a pool having a plurality of data to hierarchically upper storing addresses is done by hand via a keyboard means.

13. System according to claim 12, **characterized in that** the allocation is done by the user of the data processing system according to the invention.

14. System according to claim 12, **characterized in that** the allocation is done by the user of a data processing system connected to the data processing system according to the invention via the internet.

## Revendications

1. Installation de traitement de données comprenant un processeur et au moins une mémoire, une unité d'entrée de données et une unité de sortie de données, cette installation de traitement de données pouvant être raccordée de façon interactive, par l'intermédiaire d'un port de communication bidirectionnel, au réseau Internet mondial,
**caractérisée en ce qu'**un programme comprenant les pas suivants est implanté dans la mémoire:
- attribution à des adresses mémoire de rang supérieur des données prédéterminées d'un pool de données contenant une pluralité de données;
- sélection de données prédéterminées du pool de données selon un code d'entrée organisé correspondemment aux adresses mémoire de rang supérieur, les régions géographiques étant attribuées aux adresses mémoire de rang supérieur et des contenus spécifiques étant attribués supplémentairement aux adresses mémoire de rang supérieur, et des districts ou départements étant attribués aux régions géographiques, entrés sous la forme de leur numéro d'immatriculation.

2. Installation de traitement de données selon la revendication 1,
**caractérisée en ce que** les contenus spécifiques concernent des informations sur le commerce.

3. Installation de traitement de données selon la revendication 2,
**caractérisée en ce que** les contenus spécifiques concernent des informations sur des événements.

4. Installation de traitement de données selon l'une quelconque des revendications 2 et 3,
**caractérisée en ce que** les contenus spécifiques concernent des informations de services.

5. Installation de traitement de données selon l'une quelconque des revendications 2 à 4,
**caractérisée en ce que** les contenus spécifiques concernent des informations de circulation.

6. Installation de traitement de données selon l'une quelconque des revendications 2 à 5,
**caractérisée en ce que** les contenus spécifiques concernent des informations de firmes.

7. Installation de traitement de données selon l'une quelconque des revendications 2 à 5,
**caractérisée en ce que** les contenus spécifiques concernent des informations de voyage.

8. Installation de traitement de données selon l'une quelconque des revendications précédentes,
**caractérisée en ce que** les différentes adresses mémoire de rang supérieur sont liées entre elles par des liens.

9. Installation de traitement de données selon la revendication 8,
**caractérisée en ce que** les différentes adresses mémoire de rang supérieur sont placées sur l'Internet, par des hyperliens.

10. Installation de traitement de données selon l'une quelconque des revendications précédentes,
**caractérisée en ce que** l'unité d'entrée de données est réalisée sous la forme d'un clavier.

11. Installation de traitement de données selon l'une quelconque des revendications précédentes,
**caractérisée en ce que** l'unité de sortie de données est réalisée sous la forme d'un moniteur.

12. Installation de traitement de données selon l'une quelconque des revendications précédentes,
**caractérisée en ce que** l'attribution à des adresses mémoire de rang supérieur de données prédéterminées d'un pool de données contenant une pluralité de données s'effectue de façon manuelle, au moyen d'un clavier.

13. Installation de traitement de données selon la revendication 12,
**caractérisée en ce que** l'attribution est réalisée par l'utilisateur de l'installation de traitement de données conforme à l'invention.

14. Installation de traitement de données selon la revendication 12,
**caractérisée en ce que** l'attribution est réalisée par un utilisateur d'une installation de traitement de données raccordée à l'installation de traitement de données conforme à l'invention par le réseau Internet.
